**Europäisches Patentamt**

**European Patent Office**

**Office européen des brevets**

(19)

(11) Veröffentlichungsnummer : **0 140 433 B2**

# NEUE EUROPÄISCHE PATENTSCHRIFT

(12)

(45) Veröffentlichungstag der neuen Patentschrift :
**05.02.92 Patentblatt 92/06**

(51) Int. Cl.⁵ : **A01F 25/20, B26D 7/01**

(21) Anmeldenummer : **84201442.5**

(22) Anmeldetag : **03.09.82**

(54) **Silagegutschneider, sowie landwirtschaftliches Gerät versehen mit einem Aufnahmeorgan, das einen dergleichen Silagegutschneider aufweist.**

(43) Veröffentlichungstag der Anmeldung :
**08.05.85 Patentblatt 85/19**

(45) Bekanntmachung des Hinweises auf die
Patenterteilung :
**25.01.89 Patentblatt 89/04**

(45) Bekanntmachung des Hinweises auf die
Entscheidung über den Einspruch :
**05.02.92 Patentblatt 92/06**

(84) Benannte Vertragsstaaten :
**AT BE CH DE FR GB IT LI LU NL SE**

(56) Entgegenhaltungen :
**EP-A- 0 090 906**
**EP-A- 0 102 437**
**AU-A- 249 148**
**DE-A- 2 138 186**
**DE-A- 2 918 650**

(56) Entgegenhaltungen :
**DE-A- 3 023 986**
**DE-B- 2 311 977**
**FR-A- 2 323 608**
**FR-A- 2 409 690**
**US-A- 3 741 051**

(60) Veröffentlichungsnummer der früheren
Anmeldung nach Art. 76 EPü : **0 102 437**

(73) Patentinhaber : **Trioliet Mullos B.V.**
**Smitsbreeweg 2**
**NL-7581 HE Losser (NL)**

(72) Erfinder : **Liet, Cornelis Hendricus**
**Denekamperdijk 38**
**NL-7581 PJ Losser (NL)**

(74) Vertreter : **de Vries, Johannes Hendrik Fokke**
**et al**
**Octrooibureau Los en Stigter B.V. P.O. Box**
**20052**
**NL-1000 HB Amsterdam (NL)**

EP 0 140 433 B2

**Beschreibung**

Die Erfindung bezieht sich auf einen Silagegutschneider gemäss dem Oberbegriff des Anspruches 1, sowie auf ein landwirtschaftliches Gerät, versehen mit einem Aufnahmeorgan, das einen dergleichen Silagegutschneider aufweist.

Ein derartiger Silagegutschneider ist beschrieben in DE-A-2 918 650. Bei diesem bekannten Silagegutschneider stehen die Zähne des Tragorganes höchstens gleich mit den Messerzähne nach unten vor, wobei diese Tragorganzähne die Gegenschneiden zu den Messerzähnen bilden. In der Praxis hat es sich gezeigt, dass ein solcher Silagegutschneider keine befriedigende Schneidewirkung hat, was dadurch verursacht wird, dass die Schicht vom Silagegut, in der die Zähne des Messerorganes einragen, ins besondere bei Silagegut mit einer Faserstruktur durch das Messerorgan nicht gut durchgeschnitten wird.

EP-A 0 090 906, die im Sinne von Art. 54(3) (4) EPU zum Stand der Technik gehört, betrifft einen Silagegutschneider, bei dem das Tragorgan als zweites Messerorgan wirksam ist, wobei die beiden Messerorgane je relativ zu dem anderen vertikal auf- und abwärts bewegbar sind. Die Schneidewirkung findet somit in vertikaler Richtung statt.

Der Erfindung liegt die Aufgabe zu Grunde einen Silagegutschneider zu schaffen, die schneller und besser als den bekannten Silagegutschneider das Gewächs durchschneiden kann.

Diese Aufgabe wird gelöst durch die in den kennzeichnenden Teil des Anspruches 1 erwähnten Merkmale.

In dieser Weise wird erreicht, dass im Betrieb die unteren Festhältezähne des Tragorganes in das Gewächs ragen und die durchzuschneidende Schicht desselben festhalten, während das Messerorgan seine relative, vorzugsweise wenigstens annähernd horizontale hin- und hergehende Verstellung relativ zum Tragorgan ausführt, wodurch eine ausgezeichnete Schneidwirkung erhalten wird. Dabei entsteht weiterhin eine besonders glatte und feste Schnittfläche, wodurch weniger Luft in das Gewächs zutreten kann und das Auftreten von Brut, die die Qualität des Gewäches verringert, verhindert wird. Weiterhin kann dabei eine erhebliche Verringerung der benötigten Antriebsleistung erreicht werden.

Die Erfindung bezieht sich weiterhin auf ein landwirtschaftliches Gerät versehen mit einem Aufnahmeorgan, das dadurch gekennzeichnet ist, dass dieses Aufnahmeorgan einen Silagegutschneider nach der Erfindung aufweist.

Die Erfindung wird weiterhin erläutert an Hand der Zeichnung.

Fig. 1 zeigt einen Teil einer ersten Ausführung einer Schneidvorrichtung des erfindungsgemässen Silagegutschneiders in Vorderansicht.

Fig. 2 ist ein Querschnitt der Schneidvorrichtung nach Fig. 1.

Fig. 3 ist eine perspektivische Ansicht einer ersten Ausführung eines erfindungsgemässen Silagegutschneiders mit der Schneidvorrichtung nach Fig. 1.

Fig. 4 zeigt perspektivisch ein Eckgebiet der Schneidvorrichtung nach Fig. 3 in grösserem Masstab.

Fig. 5 zeigt einen Teil einer zweiten Ausführung einer Schneidvorrichtung nach der Erfindung in Vorderansicht.

Fig. 6 ist ein Querschnitt der Schneidvorrichtung nach Fig. 5.

Fig. 7 zeigt perspektivisch ein Eckgebiet der Schneidvorrichtung nach Fig. 5 in grösserem Masstab.

Fig. 8 zeigt einen Teil einer dritten Ausführung einer Schneidvorrichtung nach der Erfindung in Vorderansicht.

Fig. 9 ist ein Querschnitt der Schneidvorrichtung nach Fig. 8.

Fig. 10 zeigt perspektivisch ein Eckgebiet der Schneidvorrichtung nach Fig. 8 in grösserem Masstab.

Fig. 11 stellt perspektivisch eine etwas geänderte Ausführung des Silagegutschneiders nach Fig. 3 dar, welche mit einem Abwerforgan ausgeführt ist.

Fig. 12 - 15 zeigen schematisch verschiedene Stufen beim Ausschneiden eines Silagegutblockes mit dem Silagegutschneider nach Fig. 11.

Fig. 16 und 17 sind schematische Draufsichten in grösserem Masstab zu Fig. 12 bzw. Fig. 14.

Fig. 18 ist eine schematische teilweise Seitenansicht des aufstehenden Gestellteiles eines Silagegutschneiders, sowie eines in diesem geführten Tragorganes (dessen Messerelemente fortgelassen sind) in einer Ausführung in welcher dieses Tragorganes eine geringe Verschwenkung erfahren kann.

Fig. 19 ist ein Querschnitt durch die Ebene XIX-XIX in Fig. 18.

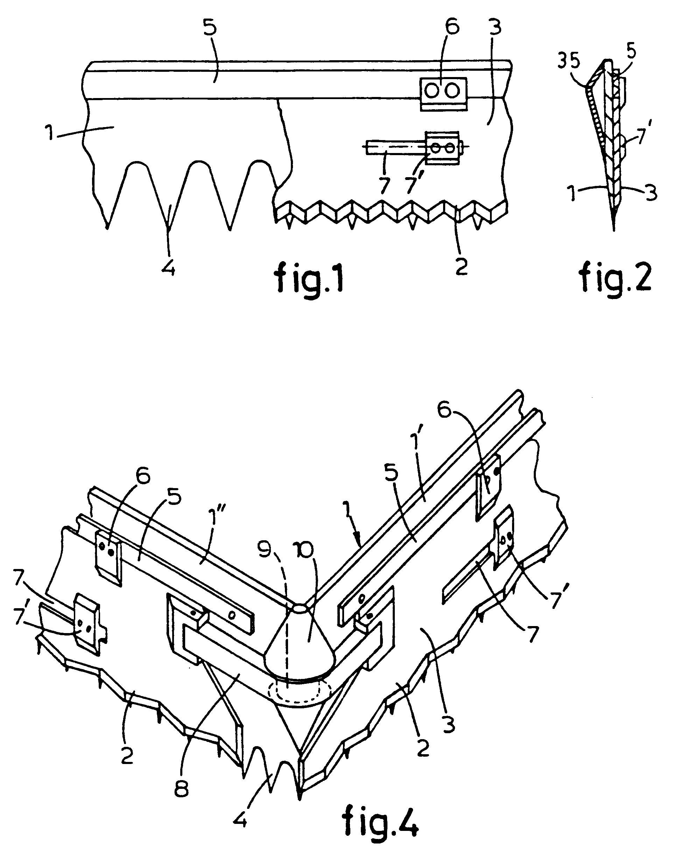

In Fig. 1 ist ein Ausführungsbeispiel dargestellt einer Schneidvorrichtung des erfindungsgemässen Silagegutschneiders zum Schneiden von Viehfutter oder dergleichem Gewächs.

Diese Schneidvorrichtung umfasst ein wenigstens annähernd vertikal auf und ab bewegbares Tragorgan 1, das ein mit Zähnen 2 ausgeführtes Messerorgan 3 unterstützt. Dieses Messerorgan 3 ist relativ zum Tragorgan 1 wenigstens annähernd horizontal oszillierend hin und her bewegbar.

Das Tragorgan 1 weist untere Festhaltezähne 4 auf, die tiefer als die Messerzähne 2 abwärts ragen.

Das Messerorgan 3 ist weiterhin vorzugsweise an der Aussenseite des Tragorganes 1 angeordnet.

Der Abstand zwischen den Spitzen auffolgender Messerzähne 2 ist vorzugsweise kleiner als der Abstand zwischen den Spitzen auffolgender Festhaltezähne 4 des Tragorganes 1, während die Höhe der Messerzähne 2 kleiner ist als die Höhe der Festhaltezähne 4 des Tragorganes 1.

Wie in Fig. 1 deutlich sichtbar ist, schliessen die Flanken der Messerzähne 2 einen kleineren Winkel mit der Verbindungslinie ihrer Zahnspitzen ein als der durch die Flanken der Festhaltezähnen 4 des Tragorganes 1 mit der Verbindungslinie ihrer Zahnspitzen eingeschlossene Winkel.

Im Ausführungsbeispiel nach den Fig. 1 - 3 sind die Flanken der Messerzähne 2 gerade und schliessen diese einen Winkel mit der Verbindungslinie der Zahnspitzen ein, der kleiner ist als 50° und vorzugsweise kleiner als oder gleich 30° ist.

Als Alternative können die Flanken der Messerzähne 2 auch nach innen gebogen sein.

Im Ausführungsbeispiel nach den Fig. 1 und 2 verlaufen die Festhaltezähne 4 des Tragorganes 1 abwärts schräg in Richtung auf das Messerorgan 3 zu, während die Messerzähne 2 abwärts schräg in Richtung auf das Tragorgan 1 zu verlaufen (Fig. 2).

Das Tragorgan 1 ist weiterhin mit einem oberen Stützrand 5 für das Messerorgan 3 ausgeführt, entlang welchem der obere Rand des Messerorganes 3 hin und her verstellbar ist.

Dieser Stützrand 5 trägt abwärts ragende Einschliesslippen 6, wobei das Messerorgan 3 zwischen diesen Einschliesslippen 6 und dem Tragorgan 1 oszillierend hin und her bewegbar eingeschlossen ist.

Weiterhin werden das Tragorgan 1 und das Messerorgan 3 gegen einander gehalten durch ein Führungsorgan, das in dem Ausführungsbeispiel nach Fig. 1 und 2 besteht aus einem oder mehreren Schlitzen 7 im Messerorgan 3, die durch aus dem Tragorgan 1 ragende Stifte passend durchlaufen werden. Aufwärts vom Messerorgan 3 tragen die Stifte eine Einschliessplatte 7′, eine Mutter oder dergleiche.

Natürlich ist es als Alternative auch möglich, dass das Messerorgan 3 Stifte trägt, die Schlitze im Tragorgan 1 passend durchlaufen.

Der Hub der hin- und hergehenden Oszillationsbewegung des Messerorganes 3 ist im allgemeinen grösser als der Abstand zwischen den Spitzen auffolgender Messerzähne des Messerorganes 3.

Im dargestellten Ausführungsbeispiel sind das Tragorgan 1 und das Messerorgan 3 plattenförmig ausgeführt.

Als Alternative kann das Messerorgan 3 auch beispielsweise aus einer mit Zähnen ausgeführten Kette oder dergleiche bestehen. Ein plattenförmiges Messerogan 3 wird bevorzugt, da dieses leichter gegen eine aufwärtsgerichtete Verstellung relativ zum Tragorgan 1 verriegelbar ist.

Weiter kann das Tragorgan 1 statt plattenförmig, auch profilförmig oder kastenförmig ausgeführt sein.

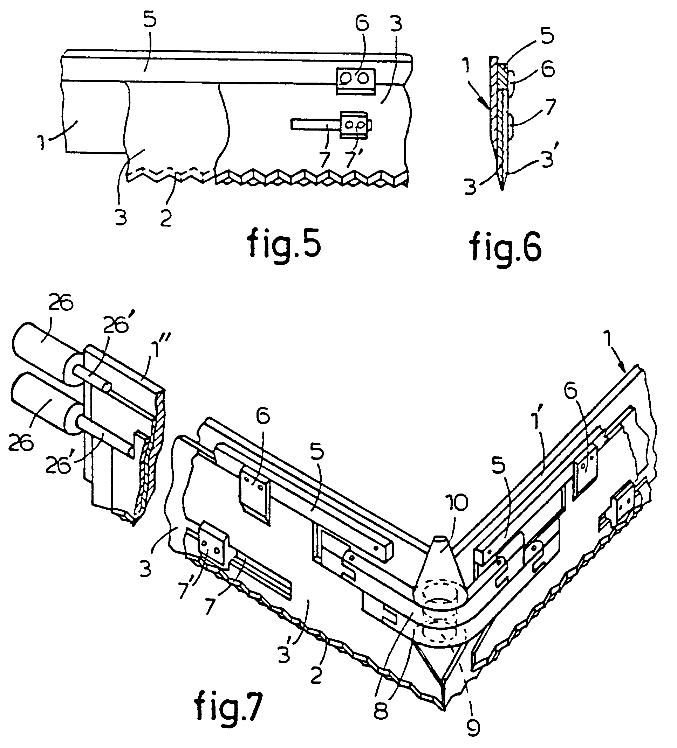

Obwohl in der Ausführung nach den Fig. 1 und 2 das Tragorgan 1 mit nur einem Messerorgan 3 zusammenwirkt, kann das Tragorgan 1 auch in der in den Fig. 5 - 10 dargestellten Weise noch ein weiteres mit Zähnen ausgeführtes Messerorgan 3′ unterstützen, das parallel zum dargestellten Messerorgan 3 verläuft und das relativ zum Tragorgan 1 vorzugsweise wenigstens ungefähr horizontal hin und her verstellbar ist, wobei die Zähne der Messerorgane 3, 3′ gegeneinander oszillierend hin und her bewegbar sind. Obwohl in den Fig. 5 - 10 nur ein weiteres Messerorgan 3′ abgebildet ist, können natürlich auch mehrere weitere Messerorgane 3′ angewandt werden.

In den Ausführungen nach den Fig. 5 - 10 ist das Tragorgan 1 ohne untere Festhaltezähne ausgeführt, aber als Alternative können auch in diesen Ausführungen wieder Festhaltezähne 4 angewandt werden. In diesem Fall schliessen die Flanken der Messerzähne des (jedes) weiteren Messerorganes 3′ einen geringeren Winkel mit der Verbindungslinie ihrer Zahnspitzen ein als der, durch die Flanken der Festhältezähne mit der Verbindungslinie ihrer Zahnspitzen eingeschlossene, Winkel.

Das weitere Messerogan 3′ bildet das Spiegelbild des Messerorganes 3.

Die beiden Messerorgane 3 und 3′ stützen beide gegen den oberen Stützrand 5, entlang welchem ihre oberen Ränder hin und her verstellbar sind. Dieser Stützrand 5 trägt wieder abwärts ragende Einschliesslippen 6, wobei die Messerorgane 3, 3′ zwischen diesen Einschliesslippen 6 und dem Tragorgan 1 hin und her bewegbar eingeschlossen sind.

Weiter werden das Tragorgan 1 und die Messerorgane 3, 3′ gegen einander gehalten durch Stifte am Tragorgan 1, die Schlitze 7 in den Messerorganen 3, 3′ durchlaufen. Auswärts vom Messerorgan, 3′ tragen die Stifte eine Einschliessplatte 7′, eine Mutter oder dergleiche.

Die Flanken der Messerzähne des (jedes) Messerorganes 3, 3′ sind im Ausführungsbeispiel nach den Fig. 5 - 7 gerade und schliessen einen Winkel mit der Verbindungslinie der Zahnspitzen ein, der kleiner ist als 50° und vorzugsweise kleiner als oder gleich 30° ist.

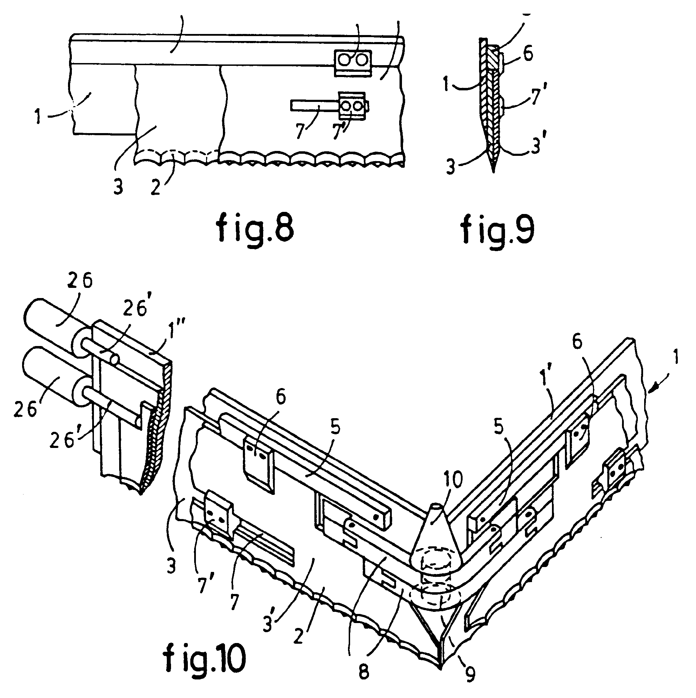

Das Ausführungsbeispiel der Schneidvorrichtung nach den Fig. 8 - 10 unterscheidet sich nur vom Ausführungsbeispiel nach den Fig. 5 - 7, dadurch, dass die Flanken der Messerzähne des (jedes) weiteren Messerorganes 3′ nach innen gebogen sind.

Die Abwärts- bzw. Aufwärtsverstellung des Tragorganes 1 kann kontinuierlich stattfinden, aber als Alternative ist es gleichfalls möglich, dass die Abwärtsverstellung des Tragorganes 1 intermittierend und die Aufwärtsverstellung des Tragorganes 1 kontinuierlich erfolgt.

Das Tragorgan 1 kann L-förmig sein und mit einem, aus biegsamem Material hergestellten, L-förmigen Messerorgan 3 zusammenwirken.

In dieser Weise wird es möglich während einer abwärts gerichtetn Verstellung des Tragorganes 1 einen Winkel aus dem Viehfutter auszuschneiden.

Da das fortlaufend über einen Winkel von etwa 90° Biegen des L-förmigen Messerorganes 3 die Lebensdauer dieses Messerorganes 3 nachteilig beeinflusst, ist es als Alternative dazu auch möglich, dass das L-förmige Tragorgan 1 zusammenwirkt mit wenigstens einem Messersatz bestehend aus zwei Messerelementen 3, die zusammen ein L-förmiges Messerorgan 3 bilden.

Diese zwei zusammen ein L-förmiges Messerorgan bildenden Messerelemente 3 können mit einander gekuppelt sein und mit Antriebsorganen zusammenwirken, die an die freien Enden der beiden Messerelemente 3 angreifen.

Obwohl im Vorstehenden nur über ein oder zwei Messerelemente 3 gesprochen ist, die zu dem L-förmigen Tragorgan 1 gehören, ist es deutlich, dass auch in diesem Fall mit jedem Messerelement 3, ein oder mehrere weitere Messerelemente 3', zusammenwirken können in der Weise wie dies in den Fig. 5 - 10 erläutert ist.

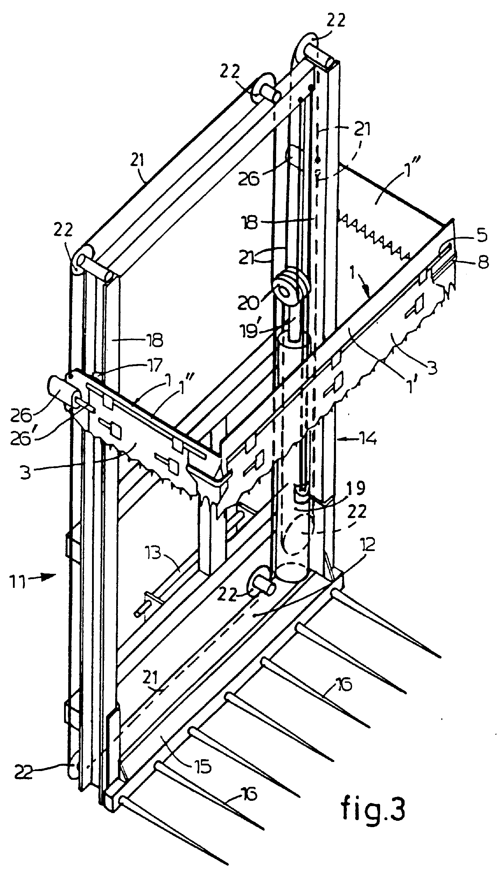

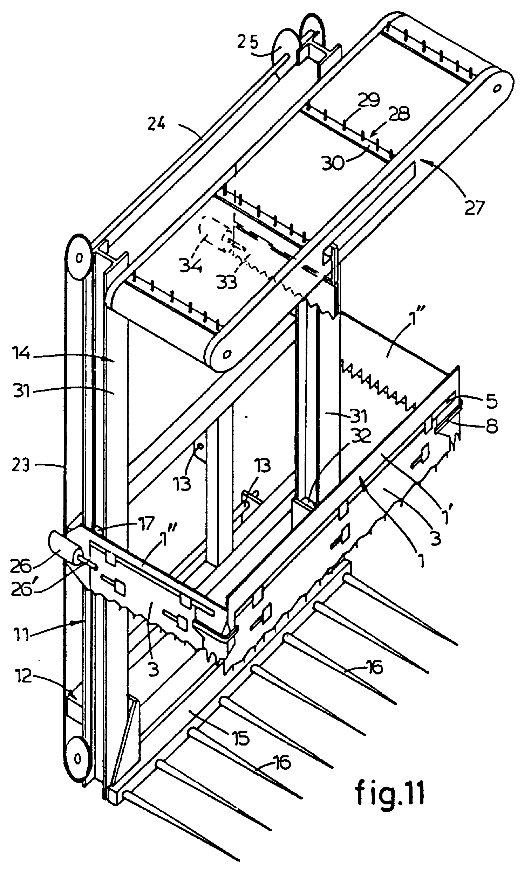

Nach einer besonders günstigen Ausführung der Schneidvorrichtung nach der Erfindung ist das Tragorgan 1 U-förmig (siehe die Fig. 3 und 11).

Dieses U-förmige Tragorgan 1 mit zwei Seitenschenkeln 1″ und einem Mittelschenkel 1′ kann zusammenarbeiten mit wenigstens einem aus biegsamen Material hergestellten U-förmigen Messerorgan 3, aber im allgemeinen wird bevorzugt, dass das U-förmige Tragorgan 1 zusammenwirkt mit wenigstens einem Messersatz, bestehend aus drei Messerelementen 3, die zusammen ein U-förmiges Messerorgan bilden.

In den Fig. 3 und 11 sind die drei, zusammen ein U-förmiges Messerorgan bildenden, Messerelemente 3 mit einander gekuppelt und wirken sie mit im folgenden noch näher beschriebenen Antriebsorganen zusammen, die an die freien Enden der beiden seitlichen Messerelemente 3 angreifen.

Wie insbesondere aus Fig. 4 hervorgeht, sind die benachbarten Enden auffolgender Messerelemente 3 miteinander gekuppelt durch eine wenigstens ungefähr horizontale Kette 8, Band oder dergleichen, deren Enden an den betreffenden Messerelementen 3 befestigt sind und die über eine in der betreffenden Ecke durch das Tragorgan 1 unterstützte Leitrolle 9 mit wenigstens ungefähr vertikaler Längsachse geführt ist.

Weiterhin verläuft oberhalb und unterhalb der Leitrolle 9 ein kegelförmiges Schutzstück 10.

Der Mittelschenkel 1′ des U-förmigen Tragorganes 1 läuft weiter aufwärts durch als die beiden Seitenschenkel 1″, um zu verhindern, dass gelockertes Gewächs über diese Seite abwärts fallen würde.

Während in Fig. 4 die Kupplung dargestellt ist zwischen den benachbarten Enden auffolgender Messerelemente 3, ist in den Fig. 7 und 10 die Kupplung abgebildet zwischen den benachbarten Enden auffolgender Messerelemente 3 und Messerelemente 3′. Dabei sind zwei horizontale Ketten 8, Bänder oder dergleiche angewandt, die beide über die Leitrolle 9 geführt sind.

Die in Fig. 3 und 11 dargestellten Silagegutschneider 11, an welchen die im Vorstehenden beschriebene Schneidvorrichtung angeordnet ist, weist ein Gestell 12 auf, das mit Anhängepunkten 13 zum Ankuppeln des Silagegutschneiders 11 an die Hebevorrichtung eines Schleppers versehen ist.

Das Gestell 12 umfasst einen aufrechten Gestellteil 14, hinter welchem sich ein horizontaler Querbalken 15 erstreckt, an welchem mehrere parallele, wenigstens ungefähr horizontale Tragzinken 16 befestigt sind. Der Querbalken 15 ist im Ausführungsbeispiel nach Fig. 3 starr mit dem aufrechten Gestellteil 14 verbunden.

Das U-förmige Tragorgan 1, dessen Mittelschenkel 1′ sich weiter aufwärts erstreckt als die Seitenschenkel 1″ und das aus drei Metallplatten zusammengesetzt ist, aber auch profilförmig oder kastenförmig ausgeführt sein kann, ist wenigstens ungefähr vertikal auf und ab verstellbar geführt mit Hilfe in seinen Enden gelagerten Führungsrollen 17, Führungsblöcke oder dergleichen, die im Eingriff mit zu dem aufrechten Gestellteil 14 des Silagegutschneiders 11 gehörenden U-Profilen 18 sind.

Die Aufwärts- und Abwärtsverstellung des U-förmigen Tragorganes 1 wird bewerkstelligt mit Hilfe durch das Gestell 12 getragener Verstellungsorgane. Diese bestehen beim Silagegutschneider 11 nach Fig. 3 aus einer durch das Gestell 12 unterstützten aufrechten Zylinder-Kolbeneinheit 19, deren Kolbenstange 19′ einen Scheibenblock 20 trägt. Mittels vier Seile 21, die über den Scheibenblock 20 und über weitere durch das Gestell 12 unterstützte Scheibenblöcke 22 geführt sind und die immer mit einem Ende auf das Gestell 12 und mit dem anderen Ende auf das freie Ende eines der Seitenschenkel 1′ des Tragorganes 1 angreifen, ist das Tragorgan 1 auf und ab verstellbar. Wenn die Kolbenstange 19′ der Zylinder-Kolbeneinheit 19 mit dem Scheibenblock 20 abwärts verstellt wird, wird das Tragorgan 1 aufwärts bewegt, während umgekehrt, wenn die Kolbenstange 19′ der Zylinder-Kolbeneinheit 19 aufwärts verstellt wird, das Tragorgan 1 abwärts bewegt wird.

Die drei, durch das Tragorgan 1 unterstützten, Messerelemente 3, welche durch die Ketten 8, Bänder oder dergleichen verbunden sind, die in den, vom aufrechten Gestellteil 14 entfernten, Ecken des Tragorganes 1 über die Leitrollen 9 geführt sind (Fig. 4), können im Ausführungsbeispiel nach Fig. 3 relativ zum Tragorgan 1 hin und her bewegt werden mittels Zylinder-Kolbeneinheiten 26, die am Tragorgan 1 abgestützt sind und die auf die freien Enden der beiden seitlichen Messerelemente 3 angreifen. Diese Zylinder-Kolbeneinheiten 26, die in diesem Ausführungsbeispiel doppelwirkend ausgeführt sind, werden über ein hydraulisches Umschaltventil und Rückschlagventile (nicht dargestellt) derart betätigt, dass die Kolbenstangen 26' der beiden Zylinder-Kolbeneinheiten 26 immer in entgegengesetzter Richtung verstellt werden, wodurch die Messerelemente 3 eine hin- und hergehende Bewegung erhalten.

Die beiden doppelwirkenden Zylinder-Kolbeneinheiten 26 sind hydraulisch gekuppelt mit der aufstehenden Zylinder-Kolbeneinheit 19, die die Aufwärts- und Abwärtsbewegung des Tragorganes 1 versorgt. Das Tragorgan 1 wird dabei schrittweise verstellt, wobei jeder Schritt mit einer hin- bzw. hergehenden Bewegung der Messerelemente 3 zusammenfällt.

In Fig. 11 ist ein Silagegutschneider 11 dargestellt, bei welchem die Aufwärts- und Abwärtsverstellung des U-förmigen Tragorganes 1 in anderer Weise bewerkstelligt wird und zwar mit Hilfe von auf den Enden der Seitenschenkel 1" des Tragorganes 1 angreifenden Ketten 23 oder dergleichen, die über obere Antriebsräder und untere Umlenkräder geführt sind. Die unteren Umlenkräder sind im aufrechten Gestellteil 14 gelagert, während die oberen Antriebsräder auf einer Antriebswelle 24 befestigt sind, die im aufrechten Gestellteil 14 gelagert ist und die über ein Antriebsrad 25 mittels einer Kette durch einen Hydromotor oder dergleiche (nicht dargestellt) mit umkehrbarer Drehrichtung antreibbar ist. Dabei wird die oberste und unterste Stellung des Tragorganes 1 durch Umkehrorgane (nicht dargestellt) bestimmt, welche die Umkehrung der Drehrichtung des Hydromotors versorgen können.

In Fig. 11 bestehen die Antriebsmittel für die hin und hergehende Bewegung der Messerelemente 3 wieder aus Zylinder-Kolbeneinheiten 26, die an die freien Enden der beiden seitlichen Messerorgane 3 angreifen.

Der Silagegutschneider 11 nach Fig. 11 ist ausgebildet mit einem oberen Abwerforgan 27, mit welchem ein Silagegutblock, nachdem dieser mittels des hinter einem Schlepper gekuppelten Silagegutschneiders 11 nach einem Viehstall übergebracht ist, regelmässig verteilt abgegeben werden kann.

Das obere Abwerforgan 27, das durch den aufrechten Gestellteil 14 unterstützt ist, umfasst einen Abfuhrförderer 28, der besteht aus durch einen Antrieb (nicht dargestellt) antreibbaren Ketten, die an den Enden von mit Stiften 29 oder dergleichen versehenen Schrableisten 30 angreifen, welche im unterem Trum des Abfuhrförderers 28 auf das Silagegut einwirken können.

In dieser Ausführung umfasst der aufrechten Gestellteil 14, statt U-Profile 18, I-Profile 31, während der Querbalken 15 nicht starr mit dem aufstehenden Gestellteil 14 verbunden ist, aber Führungsrollen 32, Führungsblöcke oder dergleiche trägt, die im Eingriff mit der Innenseite dieser I-Profile 31 sind. Diese I-Profile 31 sind auf der Aussenseite, in entsprechender Weise wie die U-Profile 18 in Fig. 3, mit den, durch die freien Enden des U-förmigen Tragorganes 1 unterstützten Führungsrollen 17, Führungsblöcke oder dergleiche im Eingriff.

Die auf und abgehende Verstellung des Querbalkens 15 kann beispielsweise, in entsprechender Weise wie die auf und abgehende Verstellung des Tragorganes 1 der Schneidvorrichtung, mittels mit dem Querbalken 15 gekuppelter, über Antriebsräder geführter, endloser Ketten oder dergleiche (nicht dargestellt) oder einer in vertikaler Richtung arbeitenden, durch das Gestell 12 getragenen, Zylinder-Kolbeneinheit (nicht dargestellt) realisiert werden.

Mit dem Abfuhrförderer 28 wirkt ein zentrales, wenigstens ungefähr horizontales Messer 33 mit unteren Schneidzähnen zusammen, das wenigstens ungefähr in der Mittellotebene des Querbalkens 15 liegt. Dieses Messer 33 ist in seiner Längsrichtung hin und her antreibbar durch ein Antriebsorgan, wie die in Fig. 11 dargestellte Zylinder-Kolbeneinheit 34, die durch das Gestell 12 unterstützt wird.

Als Alternative für das zentrale Messer 33 können auch mehrere, im Abstand neben einander verlaufenden, antreibbaren, parallellen, wenigstens ungefähr horizontalen, Messer mit unteren Schneidzähnen benutzt werden.

Wenn ein Silagegutblock im Viehstall, stützend auf dem Silagegutschneider 11, verteilt werden muss, befindet die Schneidvorrichtung sich in ihrer höchsten Stellung, gerade unter dem Abfuhrförderer 28 und umgibt dort das Messer 33 und den, gerade darunten liegenden, oberen Teil des Silagegutblockes.

Durch die intermittierende oder kontinuierliche Aufwärtsbewegung des Querbalkens 15 mit den Tragzinken 16, wird der obere Teil des, auf diesen Tragzinken 16 ruhenden, Silagegutblockes im Eingriff mit dem Messer 33 (den Messern) gebracht, das (die) die obere Schicht des Silagegutes durchschneidet (durchschneiden), bevor die Stifte 29 der Schraborgane 30 des Abfuhrförderers 28 mit dieser im Eingriff kommen.

Die Anwendung des Messers 33 (der Messer) ist besonders von grosser Bedeutung, wenn das Silagegut eine Faserstruktur aufweist, da die langen Fasern, vor dem Abwerfen durch den Abfuhrförderer 28 durch das Messer 33 (die Messer) durchgeschnitten und unterteilt werden, wodurch eine gleichmässige Abfuhr des Silagegutes sehr gefordert wird.

Der Abfuhrförderer 28 ist in der Längsrichtung des Querbalkens 15 hin und her verstellbar, wobei das Messer 33 (die Messer) seine (ihre) Stellung relativ zum Gestell 12 behält (behalten).

Diese Verstellmöglichkeit ist von Bedeutung, da bei einem sogenannten Fahrsilo meistens zwei Seitenwände auf beiden Seiten des Silageguthaufens verlaufen. Wenn der Silagegutschneider 11 entlang der einen Wand den ersten Silagegutblock schneiden muss, wird der Abfuhrförderer 28, der immer länger ist als die Breite des Silagegutblockes, da sonst das Gewächs nicht über den Seitenrand des Silagegutblockes geschüttet werden kann, in seine, von dieser Wand entfernte, Stellung gebracht, während beim Schneiden des letzten Silagegutblockes entlang der gegenüberliegenden Wand der Abfuhrförderer 28 nach seiner anderen Endstellung verstellt wird.

Der Querbalken 15 kann in seiner unteren Stellung relativ zum Gestell 12 riegelbar sein, was von Bedeutung ist beim Einfuhren der Tragzinken 16 in das Silagegut.

Um zu erreichen, dass ein ausgeschnittener Silagegutblock und das Tragorgan 1 in besonders einfacher Weise relativ zu einander aufwärts bewegt werden können, ohne dass dabei ein Verkrümmeln des Silagegutes auftritt, ist es natürlich von Bedeutung, dass einiger Spiel zwischen diesem Silagegutblock und dem Tragorgan 1 vorhanden ist.

Dies wird nach der Erfindung dadurch erreicht, dass ein Anschlag, wozu beim Silagegutschneider 11 nach Fig. 11 der Querbalken 15 dient, die Eindringtiefe in das Silagegut der, am Querbalken 15 befestigten, Tragzinken 16 derart beschränkt, dass der aufrechte Gestellteil 14, nachdem die Tragzinken 16 in das Silagegut geführt sind, noch in einigem Abstand, beispielsweise, etwa 5 cm, vom Silagegut entfernt bleibt.

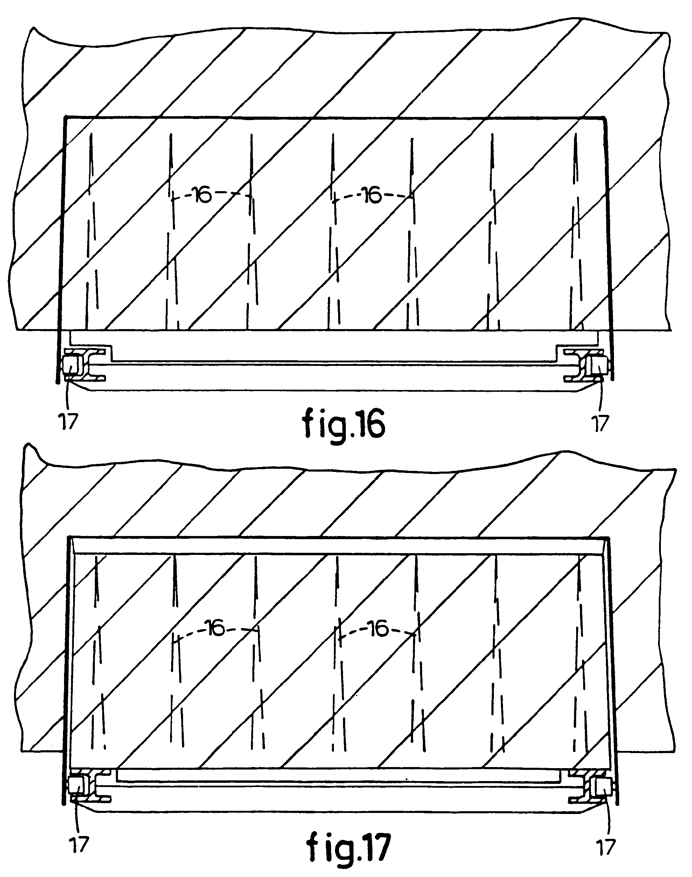

Dazu ist es weiterhin von Vorteil, wenn die, vom aufrechten Gestellteil 14 abgekehrten Ecken des U-förmigen Tragorganes 1 etwas grösser als 90°, und vorzugsweise etwa 94°, sind (Fig. 16 und 17).

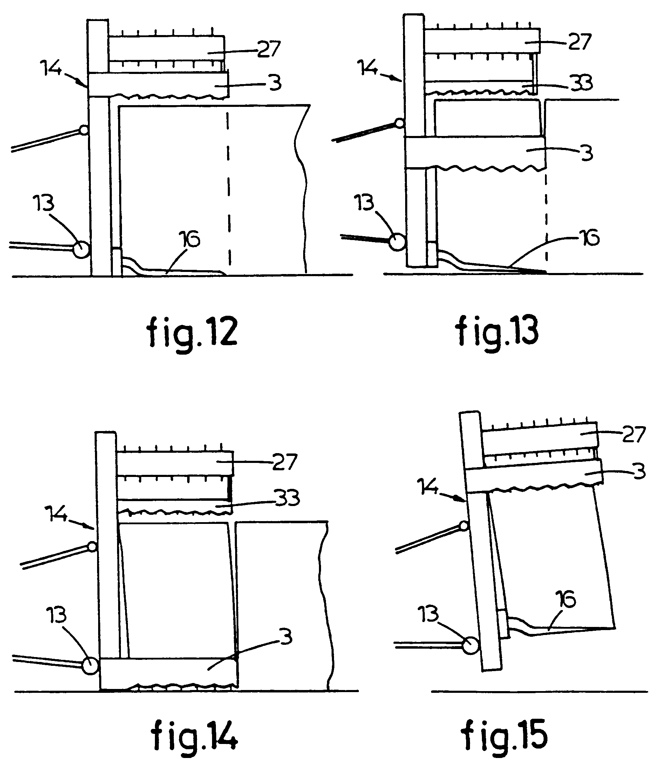

Die Wirkung des Silagegutschneiders nach Fig. 11 ist schematisch erläutert in den Fig. 12 - 15.

In Fig. 12 sind die Tragzinken 16 über den Boden in das Silagegut gestochen. Das Tragorgan 1 mit den Messerelementen 3 befinden sich noch in der höchsten Stellung gerade unter dem Abwerforgan 27.

In Fig. 13 hat das Tragorgan 1 mit den Messerelementen 3 die Schneidwirkung angefangen. Die Tragzinken 16 und/oder das Gestell 12 des Silagegutschneiders 11 sind derart dimensioniert, dass dabei, unter dem Einfluss der Schneidkraft, eine Verformung der Tragzinken 16 und/oder des Gestelles 12 auftritt. In Fig. 13 ist das Gestell 12, unter dem Einfluss der ausgeübten Schneidkraft, etwas von dem Boden geheben, wobei die Tragzinken 16 und gegebenenfalls das Gestell 12 durchgebogen sind.

In Fig. 14 hat die Schneidvorrichtung ihre untere Stellung erreicht, in welcher die Festhältezähne 4 des Tragorganes 1 mit dem Boden in Berührung gekommen sind, während die Spitzen der Messerzähne 2 einen geringen Abstand über dem Boden liegen.

Da die Schneidkraft aufgehoben ist, werden die Tragzinken 16 (und gegebenenfalls das Gestell 12) rückfedern, wodurch das Silagegutblock auf der Oberseite automatisch zum aufrechten Gestellteil 14 hin gekantelt wird.

Hiernach wird die Schneidvorrichtung nach ihrer obersten Endlage verstellt werden und der Silagegutschneider 11 gehoben werden (Fig. 15), wonach dieser durch den Schlepper nach dem Viehstall gefahren werden kann. Im Viehstall wird der Silagegutblock, durch die aufwärtse Verstellung des Querbalkens 15 und der Tragzinken 16 allmählich aufwärts bewegt (Fig. 15) und mit dem Messer 33 (den Messern) und weiterhin mit dem Abfuhrförderer 28 im Eingriff gebracht, um regelmässig verteilt abgeworfen zu werden. Natürlich kann die Kantelbewegung auch mit Hilfe eines speziellen Kantelorganes bewerkstelligt werden.

Es ist möglich, wenigstens auf den Mittelschenkel 1′ des U-förmigen Tragorganes 1 an der, zum aufrechten Gestellteil gekehrten Seite ein Wandteil 35 anzuordnen, der schräg von den aufstehenden Gestellteil 14 ab und wieder schräg auf diesem aufstehenden Gestellteil 14 zu verlauft. Dieser Wandteil 35 sorgt dafür, dass bei der Aufwärtsverstellung des U-förmigen Tragorganes 1, dieses Tragorgan 1 einen minimalen Widerstand des Silagegutes erfährt, und dass eine Kantelbewegung des ausgeschnittenen Silagegutblockes auf den aufstehenden Gestellteil 14 zu verursacht werden kann (Fig. 2).

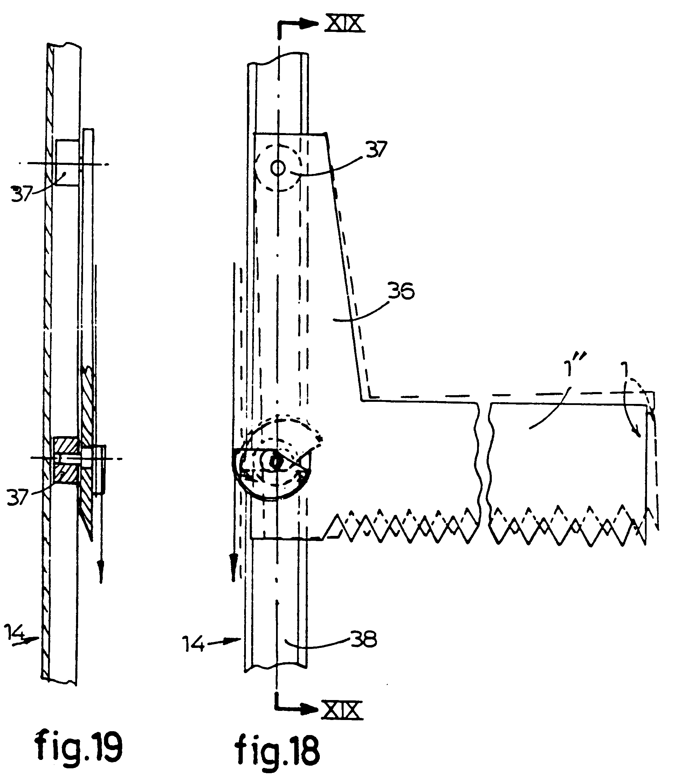

In den Fig. 18 und 19 ist eine Ausführung eines Silagegutschneiders 11 dargestellt, bei dem die Enden der beiden Seitenschenkel 1″ des Tragorganes 1 je eine aufwärtse Verlängerung 36 aufweisen, in welcher zwei Führungsrollen 37 oder dergleiche über einander unterstützt sind, die im zugehörigen Profil 38 des aufrechten Gestellteiles 14 passend geführt sind.

Auf beiden Seiten greift die untere der beiden Führungsrollen 37 mittels eines Exzenters 39 an den betreffenden Seitenschenkel 1″ des Tragorganes 1 an. Jeder Exzenter 39 ist verbunden mit einem Betätigungsorgan 40, mit welchem der Exzenter 39 drehbar ist zwischen zwei in Fig. 18 in gezogenen Linien und in Strichlinien dargestellten Stellungen, wobei die in gezogenen Linien dargestellte Stellung des Exzenters 39, sowie des Tragorganes 1 die Arbeitslage ist, in welcher die in den Fig. 18 und 19 nicht dargestellten Messerelemente ihre schneidende Wirkung ausführen können, während in der in Strichlinien dargestellten Stellung das Tragorgan 1 um die Achse der oberen Führungsrollen 37 etwas aufwärts geschwenkt ist, wodurch das Tragorgan 1 prak-

6

tisch frei vom ausgeschnittenen Silageblock kommt. In dieser Weise kann das nach dem Ausschneiden eines Silageblockes aufwärts Verstellen des Tragorganes 1 mit den daran befestigten Messerelementen 3 besonders leicht bewerkstelligt werden. Das Verstellen des Bedienungsorganes 40 kann automatisch, gleichzeitig mit dem Umkehren der Verstellungsrichtung des Tragorganes 1, stattfinden.

**Patentansprüche**

1. Silagegutschneider mit einem Gestell (12), das einen aufrechten Gestellteil (14) und einen wenigstens annähernd horizontalen Querbalken (15), an dem mehrere Tragzinken (16) befestigt sind, umfasst, und mit einer oberhalb der Tragzinken (16) und annähernd parallel zu den Tragzinken am Gestell (12) angeordneten Schneidvorrichtung, die ein auf und nieder bewegbares, L- oder U-formiges Tragorgan aufweist, welches Tragorgan (1) ein, mit Zähnen (2) ausgeführtes Messerorgan (3) unterstützt, das relativ zum Tragorgan (I) im wesentlichen horizontal oszillierend hin und her bewegbar ist, wobei das Tragorgan (1) über seine ganze Länge aufeinanderfolgende nach unten gerichtete Zähne (4) aufweist, welche Zähne als Gegenschneide gleichzeitig mit den Zähnen (2) des Messerorganes (3) auf das Silagegut einwirken können, dadurch gekennzeichnet, dass die Zähne des Tragorganes (1) als Festhaltezähne (4) tiefer als die Messerzähne (2) abwärts ragen. Obwohl in den Ausführungsbeispielen nach den Fig. 3 und 11 das U-förmige Tragorgan 1 nur einen Messersatz, bestehend aus drei Messerelementen 3, unterstützt, ist es deutlich, dass in Kombination damit auch ein oder mehrere Messersätze, bestehend aus drei Messerelementen 3′, benutzt werden können. In diesem Fall erhalten die verschiedenen Messersätze je eigene Antriebsmittel, wie die Zylinder-Kolbeneinheiten 26, die in den Fig. 7 und 10 dargestellt sind.

Die Erfindung ist nicht beschränkt auf die in der Zeichnung dargestellten Ausführungsbeispiele, die in verschiedenen Weisen im Rahmen der Ansprüche abgeändert werden können.

Es ist zum Beispiel möglich, auch andere landwirtschaftliche Geräte für Viehfuttergewächs, wie beispielsweise einen Aufnahmewagen, eine Aufnahmepresse oder dergleiche, zu versehen mit einem Aufnahmeorgan, das einem Silagegutschneider nach der Erfindung aufweist.

2. Silagegutschneider nach Anspruch 1, dadurch gekennzeichnet, dass der Abstand zwischen den Spitzen aufeinander folgender Messerzähne (2) kleiner ist als der Abstand zwischen den Spitzen auffolgender Felthaltezähne (4).

3. Silagegutschneider nach einem der vorstehenden Ansprüche, dadurch gekennzeichnet, dass die Höhe der Messerzähne (2) kleiner ist als die Höhe der Festhaltezähne (4).

4. Silagegutschneider nach einem der vorstehenden Ansprüche, dadurch gekennzeichnet, dass die Flanken der Messerzähne (2) einen kleineren Winkel mit der Verbindungslinie ihrer Zahnspitzen einschliessen als der, durch die Flanken der Festhaltezähne (4) mit der Verbindungslinie ihrer Zahnspitze eingeschlossene Winkel.

5. Silagegutschneider nach einem der vorstehenden Ansprüche, dadurch gekennzeichnet, dass die Festhaltezähne (4) des Tragorganes (1) abwärts schräg in Richtung auf das Messerorgan (3) zulaufen.

6. Silagegutschneider nach einem der vorstehenden Ansprüche, dadurch gekennzeichnet, dass das Tragorgan (1) wenigstens ein weiteres, mit Zähnen (2) ausgeführtes, Messerorgan (3′) unterstützt, das wenigstens ungefähr parallel zum erstgenannten Messerorgan (3) verläuft und relativ zum Tragorgan (1) verstellbar ist, wobei die Zähne (2) der Messerorgane (3, 3′) gegeneinander hin und her bewegbar sind.

7. Silagegutschneider nach Anspruch 6, dadurch gekennzeichnet, dass das bzw. jedes weitere Messerorgan (3′) relativ zum Tragorgan (1) wenigstens annähernd horizontal hin und her bewegbar ist.

8. Silagegutschneider nach Anspruch 6 oder 7, dadurch gekennzeichnet, dass die Flanken der Messerzähne (2) des (jedes) weiteren Messerorganes (3′) einen kleineren Winkel mit der Verbindungslinie ihrer Zahnspitzen einschliessen als der durch die Flanken der Festhaltezähne (4) mit der Verbindungslinie ihrer Zahnspitzen eingeschlossene Winkel.

9. Silagegutschneider nach einem der vorstehenden Ansprüche, dadurch gekennzeichnet, dass der Bewegungshub des Messerorganes (3) grösser ist als der Abstand zwischen den Spitzen auffolgender Messerzähne (2) des Messerorganes (3).

10. Silagegutschneider nach einem der vorstehenden Ansprüche, dadurch gekennzeichnet, dass das Messerorgan (3) auf der Aussenseite des Trmgorganes (1) angeordnet ist.

11. Silagegutschneider nach einem der vorstehenden Ansprüche, dadurch gekennzeichnet, dass die Flanken der Messerzähne (2) gerade sind und einen Winkel mit der Verbindungslinie der Zahnspitzen einschliessen, der kleiner als 50° und vorzugsweise kleiner als oder gleich 30° ist.

12. Silagegutschneider nach einem der Ansprüche 1 -10, dadurch gekennzeichnet, dass die Flanken der Messerzähne (2) nach innen Bebogen sind.

EP 0 140 433 B2

13. Silagegutschneider nach einem der vorstehenden Ansprüche, <u>dadurch gekennzeichnet</u>, dass die Messerzähne (2) abwärts schrag in Richtung aut das Tragorgan (1) zulaufen.

14. Landwirtschaftliches Gerät, versehen mit einem Aufnahmeorgan, <u>dadurch gekennzeichnet</u>, dass dieses Aufnahmeorgan einen Silagegutschneider nach einem der vorstehenden Ansprüche aufweist.


## Claims

1. A silage cutter with a frame (12) which comprises a vertical frame part (14) and an at least approximately horizontal transverse beam (15) to which are secured a plurality of support prongs (16), and with a cutting apparatus which is arranged above the support prongs (16) and approximately parallel to the support prongs on the frame (12) and which comprises an L- or U-shaped support member (1) which can be moved up and down and which supports a cutter member (3) which is constructed with teeth (2) and which can be reciprocated so as to oscillate substantially horizontally relative to the support member (1), the support member (1) comprising successive teeth (4) along its whole length which teeth are orientated downwards and can act as contra cutters upon the silage at the same time as the teeth (2) of the cutter member (3), **characterized in that** the teeth of the support member (1) project downwards as fastening teeth (4) more deeply than the cutter teeth (2).

2. A silage cutter according to claim 1, characterized in that the distance between the tips of successive cutter teeth (2) is less than the distance between the tips of successive fastening teeth (4).

3. A silage cutter according to one of the preceding claims, characterized in that the height of the cutter teeth (2) is less than the height of the fastening teeth (4).

4. A silage cutter according to any one of the preceding claims, characterized in that the flanks of the cutter teeth (2) form a smaller angle with the line connecting the tips of their teeth than the angle formed by the flanks of the fastening teeth (4) with the line connecting the tips of their teeth.

5. A silage cutter according to any one of the preceding claims, characterized in that the fastening teeth (4) of the support member (1) run obliquely downwards in the direction towards the cutter member (3).

6. A silage cutter according to any one of the preceding claims, characterized in that the support member (1) supports at least one further cutter member (3') which is constructed with teeth (2) and which extends at least approximately parallel with the first cutter member (3) and is displaceable relative to the support member (1), it being possible to reciprocate the teeth (2) of the cutter members (3, 3') towards one another.

7. A silage cutter according to claim 6, characterized in that the or each further cutter member (3') can be reciprocated at least approximately horizontally relative to the support member (1).

8. A silage cutter according to claim 6 or 7, characterized in that the flanks of the cutter teeth (2) of the (each) further cutter member (3') form a smaller angle with the line connecting the tips of their teeth than the angle formed by the flanks of the fastening teeth (4) with the line connecting the tips of their teeth.

9. A silage cutter according to any one of the preceding claims, characterized in that the movement stroke of the cutter member (3) is greater than the distance between the tips of successive cutter teeth (2) of the cutter member (3).

10. A silage cutter according to any one of the preceding claims, characterized in that the cutter member (3) is arranged on the outside of the support member (1).

11. A silage cutter according to any one of the preceding claims, characeried in that the flanks of the cutter teeth (2) are straight and form an angle with the line connecting the tips of the teeth which is less than 50°, and preferably less than or equal to 30°.

12. A silage cutter according to any one of claims 1 to 10, characterized in that the flanks of the cutter teeth (2) are bent inwards.

13. A silage cutter according to any one of the preceding claims, characterized in that the cutter teeth (2) run obliquely downwards in the direction towards the support member (1).

14. An agricultural machine provided with a loading means, characterized in that the said loading means comprises a silage cutter according to any one of the preceding claims.


## Revendications

1. Désileuse à couteau comportant un bâti (12) qui comprend une partie de bâti (14) verticale et une traverse (15) au moins à peu près horizontale, sur laquelle sont fixées plusieurs pointes de support (16), et comportant un dispositif de coupe disposé sur le bâti (12), au-dessus des pointes de support (16) et à peu près parallèlement à celles-ci, lequel dispositif de coupe présente un organe de support en L ou en U pouvant monter

EP 0 140 433 B2

et descendre, lequel organe de support (1) soutient un organe de couteau (3) comportant des dents (2), qui oscille à peu près horizontalement dans un mouvement de va-et-vient par rapport à l'organe de support (1), celui-ci présentant des dents (4) successives, le long de la longueur totale, quels dents sont dirigés vers le bas qui peuvent agir comme contre-couteaux en même temps que les dents (2) de l'organe de couteau (3) sur le produit ensilé, **caractérisée** en ce que les dents de l'organe de support (1) qui sont des dents de fixation (4) descendent plus bas que les dents de couteau (2).

2. Désileuse à couteau selon la revendication 1, caractérisée en ce que la distance de dents de couteau (2) successives est inférieure à celle séparant les pointes de dents de fixation (4) successives.

3. Désileuse à couteau selon l'une des revendications ci-dessus, caractérisée en ce que la hauteur des dents de couteau (2) est inférieure à celle des dents de fixation (4).

4. Désileuse à couteau selon l'une des revendications ci-dessus, caractérisée en ce que les flancs des dents de couteau (2) forment avec la ligne reliant leurs pointes un angle inférieur à celui que les flancs des dents de fixation (4) forment avec la ligne reliant leurs pointes.

5. Désileuse à couteau selon l'une des revendications ci-dessus, caractérisée en ce que les dents de fixation (4) de l'organe de support (1) descendent obliquement en direction de l'organe de couteau (3).

6. Désileuse à couteau selon l'une des revendications ci-dessus, caractérisée en ce que l'organe de support (1) soutient au moins un autre organe de couteau (3') pourvu de dents (2), lequel est au moins à peu près parallèle au premier organe de couteau (3) et se déplace par rapport à l'organe de support (1), les dents (2) des organes de couteau (3, 3') se déplaçant dans un mouvement de va-et-vient les unes par rapport aux autres.

7. Désileuse à couteau selon la revendication 6, caractérisée en ce que le ou chaque autre organe de couteau (3') se déplace au moins à peu près horizontalement dans un mouvement de va-et-vient par rapport à l'organe de support (1).

8. Désileuse à couteau selon la revendication 6 ou 7, caractérisée en ce que les flancs des dents de couteau (2) de l'(chaque) autre organe de couteau (3') forment avec la ligne reliant leurs pointes un angle inférieur à celui que les flancs des dents de fixation (4) forment avec la ligne reliant leurs pointes.

9. Désileuse à couteau selon l'une des revendications ci-dessus, caractérisée en ce que la course de l'organe de couteau (3) est supérieure à la distance séparant les pointes de dents de couteau (2) successives de l'organe de couteau (3).

10. Désileuse à couteau selon l'une des revendications ci-dessus, caractérisée en ce que l'organe de couteau (3) est disposé sur la face extérieure de l'organe de support (1).

11. Désileuse à couteau selon l'une des revendications ci-dessus, caractérisée en ce que les flancs des dents de couteau (2) sont droits et forment avec la ligne reliant leurs pointes un angle inférieur à 50° et de préférence inférieur ou égal à 30°.

12. Désileuse à couteau selon l'une des revendications 1 à 10, caractérisée en ce que les flancs des dents de couteau (2) sont repliés vers l'intérieur.

13. Désileuse à couteau selon l'une des revendications ci-dessus, caractérisée en ce que les dents de couteau (2) sont dirigées obliquement vers le bas en direction de l'organe de support (1).

14. Machine agricole équipée d'un organe de prélèvement, caractérisée en ce que cet organe de prélèvement comporte une désileuse à couteau selon l'une des revendications precédentes.

9

fig.1

fig.2

fig.4

fig.3

fig.5

fig.6

fig.7

EP 0 140 433 B2

fig.8

fig.9

fig.10

13

fig.11

fig.12

fig.13

fig.14

fig.15

fig.16

fig.17

fig.19

fig.18